# EUROPÄISCHE PATENTSCHRIFT

(11) **EP 1 115 972 B1**
(45) Veröffentlichungstag und Bekanntmachung des Hinweises auf die Patenterteilung: **11.08.2004**
(21) Anmeldenummer: 99923387.7
(22) Anmeldetag: 24.03.1999
(51) Int. Cl.: F02M 51/06

(54) **BRENNSTOFFEINSPRITZVENTIL**
FUEL INJECTION VALVE
SOUPAPE D'INJECTION DE CARBURANT

(30) Priorität: 23.09.1998 DE 19843534
(43) Veröffentlichungstag der Anmeldung: 18.07.2001
(73) Patentinhaber: ROBERT BOSCH GMBH, 70442 Stuttgart (DE)
(72) Erfinder: BOECKING, Friedrich, D-70499 Stuttgart (DE)
(86) Internationale Anmeldenummer: PCT/DE1999/000865
(87) Internationale Veröffentlichungsnummer: WO 2000/017510

(56) Entgegenhaltungen:
- EP-A- 0 790 402
- EP-A- 0 864 743
- DE-A- 19 650 900
- DE-A- 19 724 637
- US-A- 4 101 076
- US-A- 4 803 393
- US-A- 5 630 550

## Beschreibung

### Stand der Technik

Die Erfindung geht aus von einem Brennstoffeinspritzventil nach der Gattung des Anspruchs 1.

Aus der US-A-4,803,393 ist bereits ein Brennstoffeinspritzventil für Brennstoffeinspritzanlagen von Brennkraftmaschinen bekannt, das mit einem piezoelektrischen Aktor ausgeführt ist. Mit dem Aktor ist über eine Ventilnadel ein Ventilschließkörper, der mit einer Ventilsitzfläche zu einem Dichtsitz zusammenwirkt, betätigbar. Der Aktor ist in einer ersten Bewegungsrichtung betätigbar, und der Ventilschließkörper ist über die Ventilnadel in einer zu der ersten Bewegungsrichtung im wesentlichen senkrechten zweiten Bewegungsrichtung bewegbar. Zwischen dem Aktor und der Ventilnadel ist eine hydraulische Übersetzungseinrichtung vorgesehen, wobei der Aktor über einen ersten Obersetzerkolben und die Ventilnadel über einen zweiten Übersetzerkolben mit einer mit einem hydraulischen Medium befüllten, im wesentlichen L-förmig abgewinkelten Übersetzerkammer der Übersetzungseinrichtung in Verbindung steht. Das bekannte Brennstoffeinspritzventil ist nur als sogenanntes innenöffnendes Brennstoffeinspritzventil verwendbar.

Aus der DE 195 00 706 A1 ist bereits ein Brennstoffeinspritzventil nach der Gattung des Anspruchs 1 bekannt. Bei dem aus dieser Druckschrift hervorgehenden Brennstoffeinspritzventil ist ein piezoelektrischer Aktor zur Betätigung einer mit einem Ventilschließkörper verbundenen Ventilnadel vorgesehen. Der Ventilschließkörper wirkt mit einer Ventilsitzfläche zu einem Dichtsitz zusammen. Dabei ist sowohl die Ausgestaltung als ein nach außen öffnendes Brennstoffeinspritzventil als auch als ein nach innen öffnendes Brennstoffeinspritzventil möglich. Der aus mehreren gestapelt angeordneten, piezoelektrischen Schichten aufgebaute piezoelektrische Aktor erzeugt zwar relativ große Hubkräfte, jedoch relativ geringe Hubwege. In der genannten Druckschrift wird daher vorgeschlagen, zur Vergrößerung des auf die Ventilnadel übertragenen Hubweges zwischen der Ventilnadel und dem piezoelektrischen Aktor eine hydraulische Übersetzungseinrichtung vorzusehen.

Nachteilig ist bei dieser bekannten Bauform, daß sich aufgrund der seriell hintereinander angeordneten Betätigungselemente, bestehend aus dem piezoelektrischen Aktor, der hydraulischen Übersetzungseinrichtung mit den

Übersetzerkolben und der Ventilnadel eine relativ langgestreckte Bauform ergibt. Das bekannte Brennstoffeinspritzventil ragt deshalb relativ weit aus dem Zylinderkopf der Brennkraftmaschine heraus, was für die Montage ungünstig ist, insbesondere wenn es sich bei der Brennkraftmaschine um eine solche mit vier Ventilen und nur einer Nockenwelle handelt.

Ferner ist nachteilig, daß für die Übersetzungseinrichtung ein spezielles hydraulisches Medium eingesetzt wird, das aufgrund von Leckageverlusten im Laufe der Zeit entweichen kann. Dies kann die Funktionsweise der Übersetzungseinrichtung und die Lebensdauer des Brennstoffeinspritzventils beeinträchtigen.

Aus der DE 43 06 073 C1 ist ein Brennstoffeinspritzventil mit einem piezoelektrischen Aktor in einer anderen Bauform bekannt. Bei diesem Brennstoffeinspritzventil erfolgt eine Transformation der Bewegung des piezoelektrischen Aktors auf die Bewegung der Ventilnadel ebenso mittels einer hydraulischen Übersetzungseinrichtung. Auch bei dem aus dieser Druckschrift bekannten Brennstoffeinspritzventil sind der piezoelektrische Aktor, ein mit der Übersetzungseinrichtung zusammenwirkender Hubkolben und die Ventilnadel seriell hintereinander angeordnet, so daß sich eine relativ lange Bauform ergibt. Ferner ist auch hier der mögliche Leckageverlust des hydraulischen Mediums nachteilig.

### Vorteile der Erfindung

Das erfindungsgemäße Brennstoffeinspritzventil mit den Merkmalen des Anspruchs 1 hat demgegenüber den Vorteil, daß aufgrund der abgewinkelten, seitlichen Anordnung des Aktors sich eine geringere Längserstreckung des erfindungsgemäßen Brennstoffeinspritzventils ergibt. Die Betätigungsrichtung des Aktors verläuft dabei im wesentlichen senkrecht zu der Bewegungsrichtung des Ventilschließkörpers und der Ventilnadel. Durch die seitliche Anordnung des Aktors ragt das Brennstoff einspritzventil im Vergleich zu den aus dem Stand der Technik bekannten Brennstoffeinspritzventilen weniger weit von dem Zylinderkopf vor, so daß der Einbauraum für die Nockenwelle, für Einlaß- und Auslaßventile, für eine Zündkerze und für weitere Bauteile der Brennkraftmaschine nicht beeinträchtigt wird. Insbesondere bei einer Brennkraftmaschine mit vier oder mehr Ventilen pro Brennraum und nur einer Nockenwelle steht für die Brennstoffeinspritzventile ein nur beschränkter Einbauraum zur Verfügung, der durch die erfindungsgemäße Bauform platzsparend genutzt wird.

Durch die in den Unteransprüchen aufgeführten Maßnahmen sind vorteilhafte Weiterbildungen und Verbesserungen des im Hauptanspruch angegebenen Brennstoffeinspritzventils möglich.

Vorteilhafterweise erfolgt die Umrichtung der Bewegungsrichtung des senkrecht zu der Bewegungsrichtung des Ventilschließkörpers betätigbaren Aktors durch eine hydraulische Übersetzungseinrichtung. Die hydraulische Übersetzungseinrichtung erfüllt dabei eine Doppelfunktion: zum einen dient die hydraulische Übersetzungseinrichtung der Hubtransformation, um den relativ geringen Betätigungshub des Aktors zu einem relativ großen Hub des Ventilschließkörpers zu transformieren, zum anderen dient die hydraulische Übersetzungseinrichtung zu einer Umrichtung der Bewegungsrichtung von der Bewegungsrichtung des Aktors zu der dazu senkrechten Bewegungsrichtung der Ventilnadel und des Ventilschließkörpers.

Vorteilhaft ist die hydraulische Übersetzungseinrichtung dabei so ausgebildet, daß eine mit einem hydraulischen Medium befüllte Übersetzerkammer L-förmig abgewinkelt ist. Dabei steht ein von dem Aktor betätigter erster Übersetzerkolben mit einem ersten Schenkel der Übersetzerkammer und ein auf die Ventilnadel einwirkender zweiter Übersetzerkolben mit einem zweiten Schenkel der Übersetzerkammer in Verbindung. Wenn das Brennstoffeinspritzventil ein nach innen öffnendes Brennstoffeinspritzventil ist, ist der zweite Schenkel der Übersetzerkammer zweckmäßigerweise an der dem Ventilschließkörper zugewandten Seite des zweiten Übersetzerkolbens angeordnet, um eine nach innen gerichtete Hubbewegung zu erzeugen. Umgekehrt ist erfindungsgemäß der zweite Schenkel der Übersetzerkammer zweckmäßigerweise an der dem Ventilschließkörper abgewandten Seite des Übersetzerkolbens angeordnet, wenn das Brennstoffeinspritzventil ein nach außen öffnendes Brennstoffeinspritzventil ist.

Vorzugsweise findet als hydraulisches Medium für die Übersetzungseinrichtung der in dem Brennstoffeinspritzventil geführte und von dem Brennstoffeinspritzventil abgespritzte Brennstoff Verwendung. So muß in das Brennstoffeinspritzventil kein besonderes hydraulisches Medium, beispielsweise ein Hydrauliköl eingefüllt werden, das aufgrund von Leckageverlusten im Laufe der Zeit entweichen könnte. Vielmehr wird über Führungsspalte quasistatischer Brennstoff als hydraulisches Medium automatisch kontinuierlich nachgefüllt.

Vorzugsweise umschließt ein Vorspannelement den Aktor hülsenartig. Gegenüber einer seriellen Anordnung des Vorspannelements und des Aktors erhöht dies die Kompaktheit des erfindungsgemäßen Brennstoffeinspritzventils.

Die Ventilnadel ist vorzugsweise aus zwei Ventilnadelabschnitten zusammengesetzt, wobei ein erster Ventilnadelabschnitt einstückig mit einem der Übersetzerkolben und der andere Ventilnadelabschnitt einstückig mit dem Ventilschließkörper ausgebildet ist. Die beiden Ventilnadelabschnitte können über ein Kupplungsstück in einfacher Weise verbunden werden. Dies vereinfacht die Montage des erfindungsgemäßen Brennstoffeinspritzventils erheblich.

### Zeichnung

Ausführungsbeispiele der Erfindung sind in der Zeichnung vereinfacht dargestellt und in der nachfolgenden Beschreibung näher erläutert. Es zeigen:
- Fig. 1: einen axialen Schnitt durch ein Beispiel eines Brennstoffeinspritzventils gemäß dem Stand der Technik; und
- Fig. 2: einen axialen Schnitt durch ein Ausführungsbeispiel eines erfindungsgemäßen Brennstoffeinspritzventils.

### Beschreibung der Ausführungsbeispiele

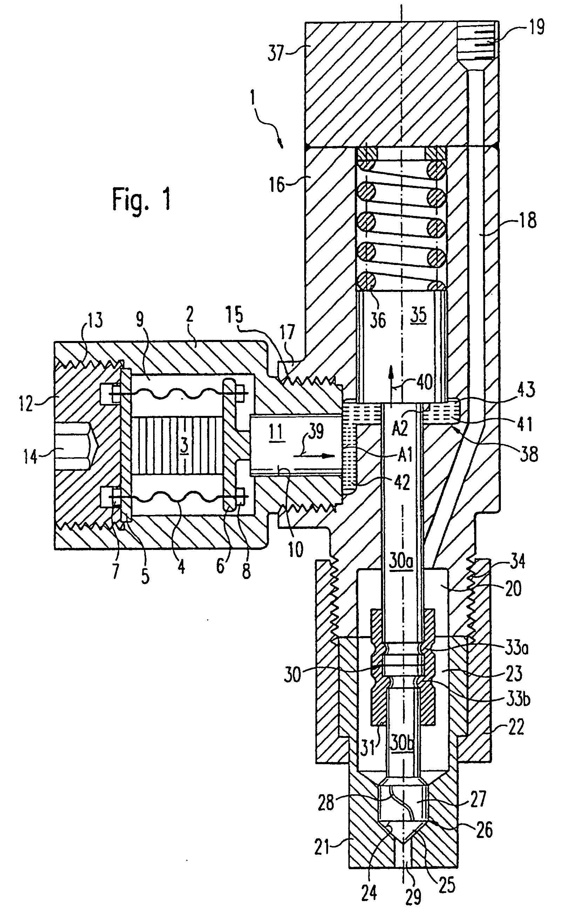

Fig. 1 zeigt in einer axialen Schnittdarstellung ein Beispiel eines Brennstoffeinspritzventils 1 gemäß dem Stand der Technik. Das Brennstoffeinspritzventil 1 eignet sich insbesondere zum direkten Einspritzen von Brennstoff, insbesondere von Benzin, in den Brennraum einer vorzugsweise gemischverdichtenden, fremdgezündeten Brennkraftmaschine.

Das Brennstoffeinspritzventil 1 weist einen ersten Gehäusekörper 2 auf, in welchem ein piezoelektrischer Aktor 3 integriert ist. Der piezoelektrische Aktor 3 besteht aus mehreren, stapelartig angeordneten Plättchen aus einem piezoelektrischen Material. Die Plättchen sind jeweils mit Elektroden versehen, die so mit zwei Polen einer elektrischen Spannungsquelle verbindbar sind, daß die elektrische Feldrichtung in jedem der Plättchen in der gleichen axialen Richtung verläuft. Anstatt eines piezoelektrischen Aktors kann selbstverständlich auch ein magnetostriktiver Aktor in gleicher Weise Verwendung finden. Der piezoelektrische Aktor 3 wird mittels eines den piezoelektrischen Aktor 3 hülsenartig oder mit zwei Spannfedern umgebenden Vorspannelements 4 unter mechanischer Vorspannung gehalten. Der piezoelektrische Aktor 3 ist zwischen einem ersten Aktorflansch 5 und einem zweiten Aktorflansch 6 eingespannt, wobei das hülsenartige-Vorspannelement 4 über Befestigungselemente 7 bzw. 8 mit dem ersten Aktorflansch 5 bzw. dem zweiten Aktorflansch 6 kraftschlüssig verbunden ist. Der piezoelektrische Aktor 3, das Vorspannelement 4 und die beiden Aktorflansche 5 und 6 sind in eine erste zylinderförmige Ausnehmung 9 des ersten Gehäusekörpers 2 eingesetzt. In einer zweiten, zylinderförmigen Ausnehmung 10, die sich an die erste zylinderförmige Ausnehmung 9 anschließt, ist ein noch näher zu beschreibender erster Übersetzerkolben 11 eingesetzt. Die axiale Lage des Aktors 3, der Aktorflansche 5 und 6 und des von dem zweiten Aktorflansch 6 axial beaufschlagten ersten Übersetzerkolbens 11 ist mittels eines Justierelements 12 einstellbar, das über ein Gewinde 13 mit dem ersten Gehäusekörper 2 verbunden ist und gleichzeitig den äußeren Abschluß der Ausnehmung 9 bildet. Die axiale Verstellung des Justierelements 12 erfolgt durch Verdrehen mittels eines in eine Werkzeugvertiefung 14 einsetzbaren Werkzeuges.

Der erste Gehäusekörper 2 ist mittels eines Gewindes 15 mit einem zweiten Gehäusekörper 16 verschraubt, wobei der zweite Gehäusekörper 16 eine seitliche Aufnahme 17 zum Einschrauben des ersten Gehäusekörpers 2 aufweist. In dem zweiten Gehäusekörper 16 ist eine Brennstoffleitung 18 integriert, die von einem Brennstoffeinlaßstutzen 19 zu einer Ausnehmung 20 führt. An dem dem Brennstoffeinlaßstutzen 19 gegenüberliegenden Ende ist ein Ventilsitzkörper 21 angeordnet, der mittels einer Spannmutter 22 gegen den zweiten Gehäusekörper 16 verspannt ist, so daß sich an die Ausnehmung 20 des zweiten Gehäusekörpers 16 eine Ausnehmung 23 des ventilsitzkörpers 21 anschließt.

An dem Ventilsitzkörper 21 ist eine kegelstumpfförmige Ventilsitzfläche 24 gebildet, die mit einem kegelförmigen Abschnitt 25 eines Ventilschließkörpers 26 zu einem Dichtsitz zusammenwirkt. Ein zylinderförmiger Abschnitt 27 des Ventilschließkörpers 26 ist mit zumindest einer Drallnut 28 versehen, um eine optimale Verteilung des Brennstoffs zu gewährleisten. An den Ventilschließkörper 26 schließt sich eine Abspritzöffnung 29 im Ventilsitzkörper 21 an.

Die Betätigung des Ventilschließkörpers 26 erfolgt über eine Ventilnadel 30, die im dargestellten Ausführungsbeispiel aus einem mit einem zweiten Übersetzerkolben 35 einstückig ausgebildeten ersten Ventilnadelabschnitt 30a und einem mit dem Ventilschließkörper 26 einstückig ausgebildeten zweiten Ventilnadelabschnitt 30b zusammengesetzt ist. Der erste Ventilnadelabschnitt 30a und der zweite Ventilnadelabschnitt 30b sind mittels eines Kupplungsstücks 31 miteinander verbunden. Dabei weisen der erste Ventilnadelabschnitt 30a und der zweite Ventilnadelabschnitt 30b jeweils eine Nut 33a bzw. 33b auf, in welche das Kupplungsstück 31 einschnappt und somit eine formschlüssige Verbindung zwischen dem ersten Ventilnadelabschnitt 30a und dem zweiten Ventilnadelabschnitt 30b herstellt. Dabei kann der erste Ventilnadelabschnitt 30a an dem zweiten Gehäusekörper 16 vormontiert werden und das Brennstoffeinspritzventil 1 zusammengesetzt werden, indem zunächst der zweite Ventilnadelabschnitt 30b mit dem Ventilschließkörper 26 an den ersten Ventilnadelabschnitt 30a angefügt und mit dem Kupplungsstück 31 verbunden wird. Schließlich kann der Ventilsitzkörper 21 aufgesetzt und mittels der Spannmutter 22 über ein Gewinde 34 mit dem zweiten Gehäusekörper 16 verspannt werden.

Zur Rückstellung der Ventilnadel 30 und des Ventilschließkörpers 26 dient eine Rückstellfeder 36, die zwischen dem zweiten Übersetzerkolben 35 und einem Deckelelement 37 des zweiten Gehäusekörpers 16 eingespannt ist.

Der erste Übersetzerkolben 11 und der zweite Übersetzerkolben 35 sind Teil einer Übersetzungseinrichtung 38. Die Übersetzungseinrichtung 38 umfaßt neben den beiden Übersetzerkolben 11 und 35 eine Übersetzerkammer 41, welche mit einem hydraulischen Medium befüllt ist. Dabei grenzt der mit dem Aktor 3 in Wirkverbindung stehende erste Übersetzerkolben 11 mit einer ersten Fläche A1 an die Übersetzerkammer 41 an, die größer bemessen ist, als eine zweite Fläche A2, mit welcher der mit der Ventilnadel 30 in Verbindung stehende zweite Übersetzerkolben 35 an die Übersetzerkammer 41 angrenzt.

Die Funktion des Brennstoffeinspritzventils 1 ist wie folgt:

Bei Beaufschlagung des piezoelektrischen Aktors 3 mit einer elektrischen Betätigungsspannung dehnt sich dieser axial aus und verschiebt über den zweiten Aktorflansch 6 den ersten Übersetzerkolben 11 in Fig. 1 nach rechts entlang einer ersten Bewegungsrichtung 39. Die Übersetzungseinrichtung 38 transformiert diese erste Bewegungsrichtung 39 in eine dazu senkrechte zweite Bewegungsrichtung 40 der Ventilnadel 30 und des Ventilschließkörpers 26. Dabei verdrängt der erste Übersetzerkolben 11 das sich in der Übersetzerkammer 41 befindliche hydraulische Medium, so daß der zweite Übersetzerkolben 35 und somit die Ventilnadel 30 und der Ventilschließkörper 26 in Fig. 1 nach oben verschoben werden. Da die Fläche A1 des ersten Übersetzerkolbens 11 größer bemessen ist als die Fläche A2 des zweiten Übersetzerkolbens 35, ist der auf die Ventilnadel 30 übertragene Ventilhub im Vergleich zu dem von dem Aktor 3 ausgeübten Betätigungshub größer.

Der Übersetzungseinrichtung 38 kommen dabei zwei Funktionen zu: zum einen die Funktion der Umlenkung der ersten Bewegungsrichtung 39 in eine dazu senkrechte Bewegungsrichtung 40 und zum anderen die Funktion der Transformation des relativ geringen Betätigungshubs des Aktors 3 in einen vergrößerten Ventilhub der Ventilnadel 30 und des Ventilschließkörpers 26.

Im dargestellten Beispiel ist die Übersetzerkammer 41 L-förmig abgewinkelt ausgebildet. Dabei hat die Übersetzerkammer 41 einen ersten Schenkel 42, der mit dem ersten Übersetzerkolben 11 in Verbindung steht, und einen zweiten Schenkel 43, der mit dem zweiten-Übersetzerkolben 35 in Verbindung steht. Diese Bauweise der Übersetzerkammer 41 hat den Vorteil, daß das Volumen der Übersetzerkammer 41 gering ist.

Da das Brennstoffeinspritzventil 1 entsprechend dem in Fig. 1 dargestellten Beispiel ein nach innen öffnendes Brennstoffeinspritzventil 1 ist, ist der zweite Schenkel 43 der übersetzerkammer 41 zweckmäßigerweise auf der dem Ventilschließkörper 26 zugewandten Seite des zweiten Übersetzerkolbens 35 angeordnet, um einen Ventilhub nach innen, d. h. in Fig. 1 nach oben, zu erzielen.

Vorteilhafterweise handelt es sich bei dem in der Übersetzerkammer 41 befindlichen hydraulischen Medium um den von dem Brennstoffeinlaßstutzen 19 über die Brennstoffleitung 18, die Ausnehmungen 20 und 23 und die Drallnut 28 zu dem von dem Ventilschließkörper 26 und der Ventilsitzfläche 24 gebildeten Dichtsitz geführten Brennstoff. Der Brennstoff kann in die Übersetzerkammer 41 über einen Führungsspalt zwischen dem zweiten Gehäusekörper 16 und dem ersten Ventilnadelabschnitt 30a quasi-statisch nachgefüllt werden. Selbstverständlich ist dieser Führungsspalt dabei so gering zu bemessen, daß bei der Betätigung des Brennstoffeinspritzventils 1 der als hydraulisches Medium wirkende Brennstoff über diesen Führungsspalt nicht oder nur in praktisch vernachlässigender Weise aus der Übersetzerkammer 41 entweichen kann. Die Verwendung des Brennstoffs als hydraulisches Medium hat den Vorteil, daß ein spezielles hydraulisches Medium, beispielsweise ein spezielles Hydrauliköl, nicht erforderlich ist. Dabei besteht keine Gefahr, daß ein spezielles Hydrauliköl den Brennstoff verunreinigen könnte. Ein durch Leckageverluste mögliches Entweichen des hydraulischen Mediums wird durch kontinuierliches Nachfüllen ausgeglichen. Der Standdruck des Brennstoffsysterns sollte über dem Dampfdruck des Brennstoffs liegen.

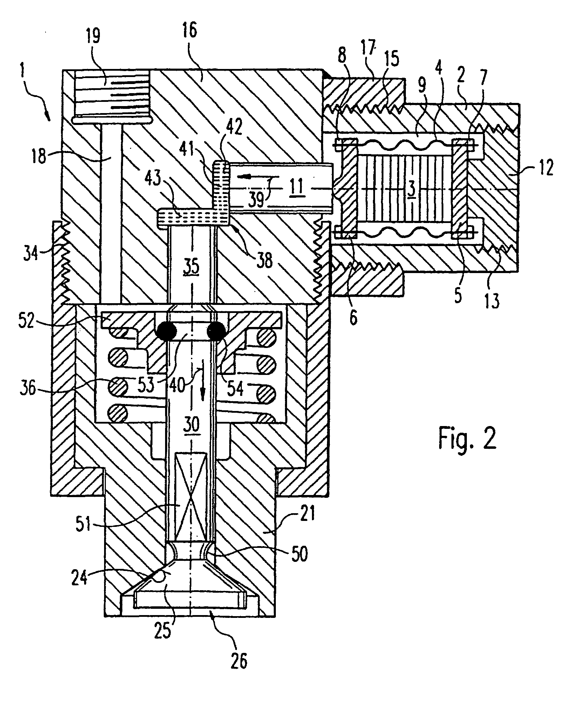

In Fig. 2 ist ein Ausführungsbeispiel eines erfindungsgemäßen Brennstoffeinspritzventils 1 dargestellt. Im Unterschied zu dem in Fig. 1 dargestellten, nach innen öffnenden Brennstoffeinspritzventil 1 handelt es sich bei dem in Fig. 2 dargestellten Brennstoffeinspritzventil 1 um ein nach außen öffnendes Brennstoffeinspritzventil 1. Bereits anhand von Fig. 1 beschriebene Elemente sind mit übereinstimmenden Bezugszeichen versehen, so daß sich insoweit eine wiederholende Beschreibung erübrigt.

Der ventilschließkörper 26 ist außenseitig an dem Ventilsitzkörper 21 angeordnet. Der Ventilsitzkörper 21 weist außenseitig eine Ventilsitzfläche 24 auf, die mit einem konischen Abschnitt 25 des Ventilschließkörpers 26 zu einem Dichtsitz zusammenwirkt. Stromaufwärts des konischen Abschnitts 25 weist der Ventilschließkörper 26 eine Verengung 50 auf, der über eine Abflachung 51 der Ventilnadel 30 mit einer Ausnehmung 23 des Ventilsitzkörpers 21 verbunden ist. Der Brennstoff strömt über einen Brennstoffeinlaßstutzen 19 zu und über die Brennstoffleitung 18 zu der Ausnehmung 23 des Ventilsitzkörpers 21 und weiter über den zwischen der Abflachung 51 von dem umgebenden Ventilsitzkörper 21 verbleibenden Spalt zu dem von dem konischen Abschnitt 25 des Ventilschließkörpers 26 mit der Ventilsitzfläche 24 gebildeten Dichtsitz. Dabei ist der Ventilschließkörper 26 mittels der Rückstellfeder 36 gegen die Ventilsitzfläche 24 vorgespannt. Die Rückstellfeder 36 greift an einem Flansch 52 an, der gegen einen in eine Nut 53 der Ventilnadel 30 eingelegten Sperring 54 drückt und somit kraftschlüssig mit der Ventilnadel 30 in Verbindung steht.

Die Übersetzerkammer 41 der Übersetzungseinrichtung 38 ist auch bei dem in Fig. 2 dargestellten Ausführungsbeispiel L-förmig abgewinkelt ausgebildet, wobei der mit dem Aktor 3 über den Aktorflansch 6 in Wirkverbindung stehende erste Übersetzerkolben 11 an einen ersten Schenkel 42 und der mit der Ventilnadel 30 in Wirkverbindung stehende zweite Übersetzerkolben 35 mit einem zweiten Schenkel 43 der Übersetzerkammer 41 in Verbindung steht.

Bei Betätigung des Aktors 3 dehnt sich dieser in Richtung auf den Gehäusekörper 16 aus und verschiebt den ersten Übersetzerkolben 11 entsprechend der ersten Bewegungsrichtung 39 in Fig. 2 nach links. Da sich der zweite Schenkel 43 der Übersetzerkammer 41 bei dem in Fig. 2 dargestellten Ausführungsbeispiel auf der dem Ventilschließkörper 26 abgewandten Seite des zweiten Übersetzerkolbens 35 befindet, wird der zweite Übersetzerkolben 35 entsprechend der zweiten Bewegungsrichtung 40 in Fig. 2 nach unten verschoben. Der zweite Übersetzerkolben 35 drückt dabei gegen die Ventilnadel 30 und verschiebt diese zusammen mit dem Ventilschließkörper 26 in Fig. 2 nach unten, um so das Brennstoffeinspritzventil 1 zu öffnen. Nach Abschalten der den Aktor 3 betätigenden elektrischen Spannung wird die Ventilnadel 30 und der mit dieser verbundene Ventilschließkörper 26 durch die Rückstellfeder 36 zurückgestellt, bis der Ventilschließkörper 26 wieder an der Ventilsitzfläche 24 dichtend anliegt.

Ein weiterer Unterschied zu dem in Fig. 1 dargestellten Beispiel besteht bei dem in Fig. 2 dargestellten erfindungsgemäße Ausführungsbeispiel darin, daß der erste Übersetzerkolben 11 nicht in dem ersten Gehäusekörper 2, sondern in dem zweiten Gehäusekörper 16 integriert ist.

Das Nachfüllen der übersetzerkammer 41 zum Ausgleich etwaiger Leckageverluste erfolgt bei dem in Fig. 2 dargestellten Ausführungsbeispiel durch einen schmalen Führungsspalt zwischen dem zweiten Übersetzerkolben 35 und dem zweiten Gehäusekörper 16.

Die Erfindung ist nicht auf das dargestellte Ausführungsbeispiel beschränkt. Beispielsweise kann statt eines piezoelektrischen Aktors 3 in gleicher Weise auch ein magnetostriktiver Aktor Verwendung finden.

## Patentansprüche

1. Brennstoffeinspritzventil (1), insbesondere Einspritzventil für Brennstoffeinspritzanlagen von Brennkraftmaschinen, mit einem piezoelektrischen oder magnetostriktiven Aktor (3), mit einem von dem Aktor (3) über eine Ventilnadel (30) betätigbaren Ventilschließkörper (26), der mit einer Ventilsitzfläche (24) zu einem Dichtsitz zusammenwirkt, wobei der Aktor (3) in einer ersten Bewegungsrichtung (39) betätigbar ist und der Ventilschließkörper (26) über die Ventilnadel (30) in einer zu der ersten Bewegungsrichtung (39) im wesentlichen senkrechten zweiten Bewegungsrichtung (40) bewegbar ist, mit einer zwischen dem Aktor (3) und der Ventilnadel (30) vorgesehenen hydraulischen Übersetzungseinrichtung (38), wobei der Aktor (3) über einen ersten übersetzerkolben (11) und die Ventilnadel (30) über einen zweiten übersetzerkolben (35) mit einer mit einem hydraulischen Medium befüllten, im wesentlichen L-förmig abgewinkelten Obersetzerkammer (41) der Übersetzungseinrichtung (38) in Verbindung steht und wobei eine erste Flache (A1), mit welcher der erste übersetzerkolben (11) mit einem ersten Schenkel (42) der Übersetzerkammer (41) in Verbindung steht, größer ist als eine zweite Fläche (A2), mit welcher der zweite übersetzerkolben (35) mit einem zweiten Schenkel (43) der Ubersetzerkammer (41) in Verbindung steht,
**dadurch gekennzeichnet,**
**daß** das Brennstoffeinspritzventil (1) ein nach außen öffnendes Brennstoffeinspritzventil (1) ist und daß der zweite Schenkel (43) der im wesentlichen L-förmigen Obersetzerkammer (41) an der dem Ventilschließkörper (26) abgewandten Seite des zweiten Obersetzerkolbens (35) angeordnet ist.

2. Brennstoffeinspritzventil nach Anspruch 1,
**dadurch gekennzeichnet,**
**daß** mit der Ventilnadel (30) oder dem zweiten übersetzerkolben (35) ein Flansch (52) verbunden ist, an welchem eine Ruckstellfeder (36) angreift.

3. Brennstoff einspritzventil nach Anspruch 1 oder 2,
**dadurch gekennzeichnet,**
**daß** das hydraulische Medium, mit welchem die übersetzerkammer (41) befüllt ist, in dem Brennstoffeinspritzventil (1) zu dem Dichtsitz geführter Brennstoff ist.

4. Brennstoffeinspritzventil nach einem der Ansprüche 1 bis 3,
**dadurch gekennzeichnet,**
**daß** ein Vorspannelement (4) den Aktor (3) hülsenartig umschließt.

5. Brennstoffeinspritzventil nach einem der Ansprüche 1 bis 4,
**dadurch gekennzeichnet,**
**daß** die Ventilnadel (30) aus einem mit dem zweiten Übersetzerkolben (35) einstückig ausgebildeten ersten Ventilnadelabschnitt (30a) und einem mit dem ventilschließkörper (26) einstückig ausgebildeten zweiten Ventilnadelabschnitt (30b) besteht, wobei der erste Ventilnadelabschnitt (30a) mit dem zweiten Ventilnadelabschnitt (30b) über ein Kupplungsstück (31) verbunden ist.

## Claims

1. Fuel injection valve (1), in particular injection valve for fuel injection systems of internal combustion engines, having a piezoelectric or magnetostrictive actuator (3), having a valve closing body (26) which can be actuated by the actuator (3) via a valve needle (30) and interacts with a valve seat face (24) to form a sealing seat, it being possible to actuate the actuator (3) in a first movement direction (39) and it being possible to move the valve closing body (26) via the valve needle (30) in a second movement direction (40) which is substantially perpendicular to the first movement direction (39), having a hydraulic transmission device (38) which is provided between the actuator (3) and the valve needle (30), the actuator (3) being connected via a first transmitter plunger (11) and the valve needle (30) being connected via a second transmitter plunger (35) to a transmitter chamber (41) of the transmission device (38), the said transmitter chamber (41) being filled with a hydraulic medium and bent away substantially in an L-shape, and a first face (A1), to which the first transmitter plunger (11) is connected with a first limb (42) of the transmitter chamber (41), being larger than a second face (A2), to which the second transmitter plunger (35) is connected with a second limb (43) of the transmitter chamber (41), **characterized in that** the fuel injection valve (1) is a fuel injection valve (1) which opens into the exterior, and **in that** the second limb (43) of the substantially L-shaped transmitter chamber (41) is arranged on that side of the second transmitter plunger (35) which faces away from the valve closing body (26).

2. Fuel injection valve according to Claim 1, **characterized in that** a flange (52) is connected to the valve needle (30) or the second transmitter plunger (35), on which flange (52) a restoring spring (36) acts.

3. Fuel injection valve according to Claim 1 or 2, **characterized in that** the hydraulic medium with which the transmitter chamber (41) is filled is fuel which is fed in the fuel injection valve (1) to the sealing seat.

4. Fuel injection valve according to one of Claims 1 to 3, **characterized in that** a prestressing element (4) surrounds the actuator (3) in the manner of a sleeve.

5. Fuel injection valve according to one of Claims 1 to 4, **characterized in that** the valve needle (30) comprises a first valve needle section (30a), which is configured integrally with the second transmitter plunger (35), and a second valve needle section (30b), which is configured integrally with the valve closing body (26), the first valve needle section (30a) being connected to the second valve needle section (30b) via a coupling piece (31).

## Revendications

1. Injecteur de carburant (1), notamment pour des installations d'injection de carburant dans des moteurs à combustion interne, comprenant un actionneur (3) piézoélectrique ou magnétostrictif, un obturateur de soupape (26) commandé par l'actionneur (3) par l'intermédiaire d'une aiguille d'injecteur (30), cet obturateur coopérant avec une surface de siège de soupape (24) pour former un siège d'étanchéité,
l'actionneur (3) étant actionné dans une première direction de déplacement (39) et l'obturateur de soupape (26) étant déplacé par l'intermédiaire de l'aiguille d'injecteur (30) dans une deuxième direction (40) essentiellement perpendiculaire à la première direction de mouvement (39),
un amplificateur hydraulique (38), l'actionneur (3) communiquant par l'intermédiaire d'un premier piston amplificateur (11) et l'aiguille d'injecteur (30) par l'intermédiaire d'un second piston amplificateur (35) avec une chambre d'amplification (41) de l'amplificateur (38), cette chambre d'amplification (41), remplie de liquide hydraulique ayant une forme coudée essentiellement en forme de L, et
une première surface (A1) avec laquelle communique le premier piston amplificateur (11) étant reliée à une première branche (42) de la chambre d'amplification (41), cette première surface étant plus grande qu'une seconde surface (A2) par laquelle le second piston amplificateur (35) communique avec une seconde branche (43) de la chambre d'amplification (41),
**caractérisé en ce que**
l'injecteur de carburant (1) s'ouvre vers l'extérieur et la seconde branche (43) de la chambre d'amplification (41) essentiellement en forme de L, est prévue sur le côté du second piston amplificateur (35) à l'opposé de l'obturateur de soupape (26).

2. Injecteur de carburant selon la revendication 1,
**caractérisé en ce qu'**
une bride (52) est reliée à l'aiguille d'injecteur (30) ou au second piston amplificateur (35), et un ressort de rappel (36) agit sur cette bride.

3. Injecteur de carburant selon la revendication 1 ou la revendication 2,
**caractérisé en ce que**
le liquide hydraulique remplissant la chambre d'amplification (41) est du carburant guidé dans l'injecteur de carburant (1) vers le siège d'étanchéité.

4. Injecteur de carburant selon l'une des revendications 1 à 3,
**caractérisé par**
un élément de précontrainte (4) qui entoure l'actionneur (3) à la manière d'un manchon.

5. Injecteur de carburant selon l'une des revendications 1 à 4,
**caractérisé en ce que**
l'aiguille d'injecteur (30) se compose d'un premier segment d'aiguille d'injecteur (30a) réalisé en une seule pièce avec le second piston amplificateur (35) ainsi qu'un second segment d'aiguille d'injecteur (30b) réalisé en une seule pièce avec l'obturateur de soupape (26), le premier segment d'aiguille d'injecteur (30a) étant relié au second segment d'aiguille d'injecteur (30b) par une pièce de couplage (31).
